# FASCICULE DE BREVET EUROPEEN

(11) **EP 2 373 833 B1**
(45) Date de publication et mention de la délivrance du brevet: **17.04.2013**
(21) Numéro de dépôt: 10700020.0
(22) Date de dépôt: 06.01.2010
(51) Int. Cl.: H01M 8/02, H01M 8/24, C25B 9/10, C25B 1/04, H01M 8/12

(54) **PROCEDE DE FABRICATION D'UN ELECTROLYSEUR HAUTE TEMPERATURE OU D'UNE PILE A COMBUSTIBLE HAUTE TEMPERATURE COMPRENANT UN EMPILEMENT DE CELLULES ELEMENTAIRES**
VERFAHREN ZUR HERSTELLUNG EINES HOCHTEMPERATUR-ELEKTROLYSATORS ODER EINER HOCHTEMPERATUR-BRENNSTOFFZELLE MIT EINEM ELEMENTARZELLENSTAPEL
METHOD FOR MAKING A HIGH-TEMPERATURE ELECTROLYSER OR A HIGH-TEMPERATURE FUEL CELL INCLUDING A STACK OF ELEMENTARY CELLS

(30) Priorité: 07.01.2009 FR 0950071
(43) Date de publication de la demande: 12.10.2011
(73) Titulaire: Commissariat à l'Énergie Atomique et aux Énergies Alternatives, 75015 Paris (FR)
(72) Inventeur: BAFFIE, Thierry, F-38120 Saint-Egreve (FR); CIGNA, Julien, F-38630 Sassenage (FR)
(74) Mandataire: Ilgart, Jean-Christophe
(86) Numéro de dépôt international: PCT/EP2010/050082
(87) Numéro de publication internationale: WO 2010/079184

(56) Documents cités:
- DE-A1-102005 009 307
- US-A- 5 629 103
- US-A1- 2007 141 435

## Description

### DOMAINE TECHNIQUE

L'invention concerne un procédé de fabrication d'un électrolyseur haute température (« EHT », ou « HTE » c'est à dire « High-Temperature Electrolyzer » en langue anglaise) ou d'une pile à combustible haute température (« SOFC » ou « Solid Oxide Fuel Cell » en langue anglaise) comprenant un empilement de cellules élémentaires.

Le domaine technique de l'invention peut ainsi être défini de manière générale comme celui des électrolyseurs haute température et des piles à combustible haute température et plus précisément comme celui des électrolyseurs haute température et des piles à combustible haute température comprenant un empilement de cellules élémentaires.

### ÉTAT DE LA TECHNIQUE ANTÉRIEURE

Dans les électrolyseurs haute température, l'électrolyse de l'eau à haute température est réalisée à partir d'eau vaporisée. La fonction d'un électrolyseur haute température est de transformer la vapeur d'eau en hydrogène et en oxygène selon la réaction suivante : 2 H₂O (g)→ 2H₂ + O₂.

Cette réaction est réalisée par voie électrochimique dans les cellules de l'électrolyseur.

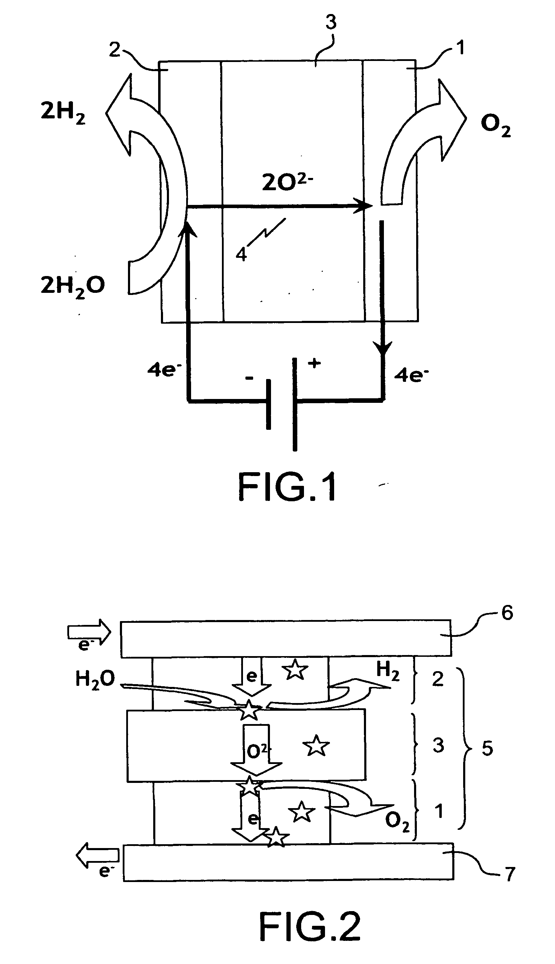

Chaque cellule élémentaire est, comme cela est montré sur la figure 1, constituée de deux électrodes, à savoir une anode (1) et une cathode (2), prenant en sandwich un électrolyte solide généralement sous forme de membrane (3).

Les deux électrodes (1, 2) sont des conducteurs électroniques, et l'électrolyte (3) est un conducteur ionique.

Les réactions électrochimiques se font à l'interface entre chacun des conducteurs électroniques et le conducteur ionique.

A la cathode (2), la demi-réaction est la suivante : 2H₂O + 4 e⁻ → 2H₂ + 20²⁻ ;
Et à l'anode (1), la demi-réaction est la suivante: 20²⁻ → O₂ + 4e⁻.

L'électrolyte (3), placé entre les deux électrodes, est le lieu de migration des ions O²⁻ (4), sous l'effet du champ électrique créé par la différence de potentiel imposée entre l'anode (1) et la cathode (2).

Un réacteur élémentaire, représenté sur la figure 2, est constitué d'une cellule élémentaire (5) telle que décrite plus haut, avec une anode (1), un électrolyte (3), et une cathode (2) et de deux connecteurs mono-polaires ou plus exactement deux demi-interconnecteurs (6, 7) qui assurent les fonctions électrique, hydraulique et thermique. Ce réacteur élémentaire est appelé module.

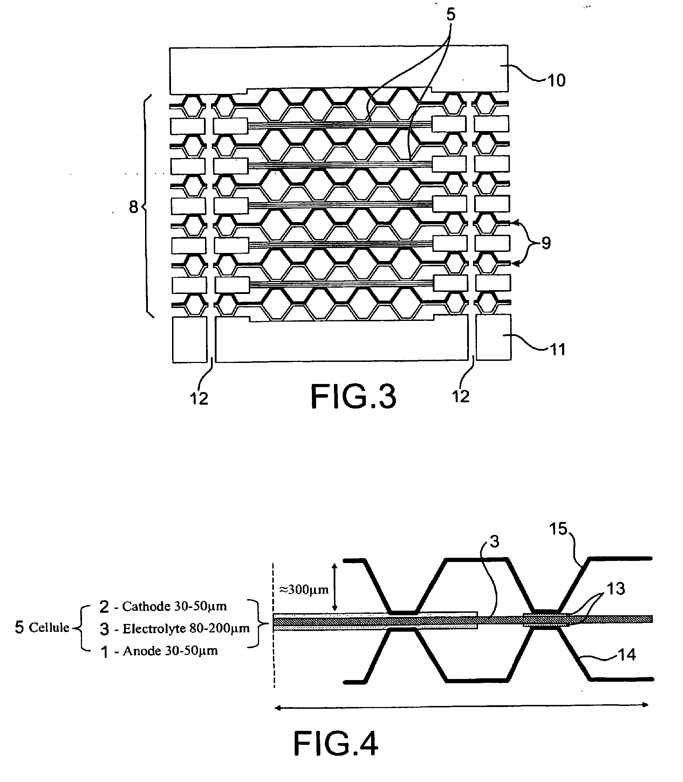

Pour augmenter les débits d'hydrogène et d'oxygène produits, et comme cela est montré sur la figure 3, plusieurs modules élémentaires sont empilés (8), les cellules (5) étant alors séparées par des interconnecteurs ou plaques d'interconnexion bipolaires (9).

L'ensemble des modules (8) est positionné entre deux plaques d'interconnexion supérieure (10) et inférieure (11) qui sont porteuses des alimentations électriques et des alimentations en gaz (12). On parle alors d'empilement ou de « stack » (figure 3).

Il existe deux concepts, configurations, architectures pour les d'empilements ou « stacks » :
- les stacks tubulaires, dans lesquels les cellules sont des tubes, et
- les stacks planaires, dans lesquels les cellules sont fabriquées sous forme de plaques comme sur la figure 3.

Dans l'architecture planaire, les cellules et les interconnecteurs sont en contact en de nombreux points. La fabrication de l'empilement, du stack, est soumise à des tolérances fines quant à la planéité des cellules afin d'éviter des pressions de contact trop élevées et une distribution inhomogène des contraintes, qui peut conduire à la fissuration des cellules.

Les joints d'étanchéité dans un empilement, stack, ont pour objectifs d'empêcher une fuite d'hydrogène de la cathode vers les anodes voisines, d'empêcher une fuite d'oxygène de l'anode vers les cathodes voisines, d'empêcher une fuite d'hydrogène vers l'extérieur de l'empilement, stack, et enfin de limiter les fuites de vapeur d'eau des cathodes vers les anodes.

Dans le cadre du développement d'empilement pour l'électrolyse à haute température (« EHT »), et comme cela est montré sur la figure 4, des joints étanches aux gaz (13) sont ainsi réalisés entre les cellules (5) d'électrolyse planaires, constituées chacune d'une tricouche céramique Anode / Electrolyte / Cathode, et les interconnecteurs ou plaques d'interconnexion métalliques (9).

Il est à noter que les dimensions en µm données sur la Figure 4 ne sont données qu'à titre d'exemples.

Plus précisément, un joint est réalisé d'une part entre la surface inférieure de chaque cellule (5) et le demi-interconnecteur supérieur (14) de la plaque d'interconnexion située en-dessous de la cellule, et d'autre part entre la surface supérieure de chaque cellule et le demi-interconnecteur inférieur (15) de la plaque d'interconnexion située au-dessus de la cellule (5).

Ces joints (13) doivent généralement présenter un débit de fuite sous air inférieur à 10⁻³ Nml/min/mm entre 700 °C et 900°C sous un différentiel de pression de 20 à 500 mbar.

Outre cette fonction d'étanchéité, le joint peut, dans certains cas, avoir des fonctions secondaires d'assemblage et de conduction électrique. Pour certaines architectures d'empilements, une pièce en céramique, appelée support de cellule, peut être placée entre les cellules et les interconnecteurs ; et des joints étanches aux gaz sont alors également requis avec cette pièce support de cellule.

Plusieurs solutions d'étanchéité sont actuellement étudiées, à savoir : les céments ou adhésifs céramiques, les joints en verres ou en vitrocéramiques, les joints métalliques en compression, les joints au mica en compression, les joints brasés et des solutions mixtes faisant appel à plusieurs de ces techniques.

Ces joints doivent permettre d'assurer les étanchéités entre la chambre cathodique et l'extérieur, entre la chambre anodique et l'extérieur, et entre les deux chambres, et d'éviter ainsi les fuites de gaz entre les deux chambres et vers l'extérieur.

Les étanchéités par brasage sont en général réalisées entre les matériaux denses que sont d'une part l'électrolyte (3), par exemple en Zircone Yttriée et d'autre part les interconnecteurs (9, 14, 15), ou les supports de cellule.

Dans le cas de cellules de piles à combustible haute température « SOFC » dans lesquelles le support est formé par l'électrolyte et qui sont ainsi dénommées Cellules à électrolyte support (« ESC » ou « Electrolyte-Supported Cell » en langue anglaise), les électrodes sont de plus petites dimensions que l'électrolyte pour que les joints brasés réalisés en périphérie ne soient pas en contact avec les électrodes.

De même, industriellement, pour des Cellules « SOFC » à anode support (« ASC » ou « Anode-Supported Cell » en langue anglaise), les dimensions de la cathode sont, elles, réduites pour pouvoir braser l'interconnecteur sur l'électrolyte, car l'interconnecteur et l'électrolyte sont tous deux constitués par des matériaux denses. Il existe donc alors un inconvénient certain lié à la perte de surface des électrodes.

En effet, les électrodes, anode et cathode, sont des matériaux poreux, présentant une porosité généralement de l'ordre de 30-50% en volume et le brasage de tels matériaux poreux présentent de nombreuses difficultés et de nombreux inconvénients.

Bien que certaines demandes de brevet, par exemple les demandes WO-A1-2006/086037 ; WO-A2-2006/127045 ; WO-A2-2007/062117 mentionnent la possibilité de braser des électrodes poreuses, aucune démonstration de la faisabilité d'un tel procédé sans dégradation des électrodes n'est faite à l'échelle du grain.

Plus précisément, si l'on tente de réaliser un joint brasé entre ces électrodes poreuses et les interconnecteurs pour assurer une étanchéité dans le sens de l'épaisseur des électrodes, l'alliage de brasage s'infiltre par effet capillaire dans les pores sur de très grandes distances, pouvant atteindre latéralement par exemple plusieurs mm, ce qui réduit leur surface électrochimiquement active et diminue ainsi leur rendement.

En diminuant la température de brasage de façon à rendre l'alliage visqueux, on peut parvenir à contrôler son infiltration dans les électrodes.

Mais, pour un empilement, stack, ceci demande une parfaite homogénéité de la température sur l'ensemble de l'empilement, du stack, ce qui est industriellement très difficile à maîtriser.

Aujourd'hui, l'épaisseur des électrodes poreuses est définie à ± 10 µm par les fournisseurs et la cote nominale est susceptible d'évoluer ou d'être modifiée.

Devant ces risques, et malgré les problèmes évoqués plus haut, le choix a donc été fait de réaliser les étanchéités interconnecteur/cellule sur les électrodes poreuses. Cette orientation permet une simplification notable sur la spécification géométrique des cellules.

Cependant, pour bien contrôler la chaîne de cotes d'un empilement, stack, d'électrolyse et ainsi maintenir tous les contacts électriques entre les interconnecteurs et les électrodes, une surépaisseur limitée, voire aucune surépaisseur ne doit être créée par les joints brasés à l'interface interconnecteur/cellule.

Si une surépaisseur est incontournable, elle demande, soit de parfaitement maîtriser une épaisseur constante des joints brasés pour chaque cellule, soit d'ajouter des cales d'épaisseur, appelées aussi espaceurs, soit encore d'usiner ou d'emboutir les interconnecteurs avec d'extrêmes précisions sur leurs tolérances géométriques.

La première solution n'est pas du tout maîtrisée, tandis que les deuxième et troisième solutions compliquent le procédé de fabrication et doivent être évitées.

Le document US-A-5,629,103 décrit une pile à combustible à haute température SOFC et son procédé de préparation.

Plus précisément, le procédé permet la préparation d'une structure multicouche constituée par une couche d'électrolyte pourvue sur ses deux faces d'une couche d'électrode (respectivement anode et cathode), pour une SOFC à structure planaire.

Une couche intermédiaire en céramique qui est constituée par un matériau électroniquement et ioniquement conducteur est appliquée sur au moins une surface lisse de la couche d'électrolyte.

La couche d'anode ou la couche de cathode est appliquée sur cette couche intermédiaire. La couche intermédiaire et la couche d'électrode sont ensuite frittées.

Sur la figure 2, est représentée une SOFC avec une anode AN, une cathode KA, et un électrolyte E, et des couches intermédiaires ZS et ZS'. Aux bords de la couche d'électrolyte E qui forment la région d'assemblage FB, les couches intermédiaires ZS et ZS' peuvent être discontinues de sorte qu'elles ne soient pas reliées aux régions internes des couches intermédiaires ZS et ZS'. Du matériau d'électrode n'est pas appliqué à cette région d'assemblage FB discontinue des couches intermédiaires ZS et ZS' car elle sert à recevoir la brasure L.

Dans ce document, l'assemblage entre les couches de transport de gaz GTS et les couches intermédiaires (et non l'électrolyte) est réalisé par brasage dans une zone d'assemblage FB située au bord des cellules.

On peut considérer que les couches intermédiaires sont ajourées et reçoivent de la brasure sur une zone FB délimitée par les jours, cette zone recouvrant l'électrolyte E.

Le procédé selon l'invention se distingue fondamentalement de celui de ce document en ce qu'il met en oeuvre des électrodes ajourées et non une couche intermédiaire ajourée.

Il existe donc, au vu de ce qui précède, un besoin pour un procédé de fabrication d'un électrolyseur haute température ou d'une pile à combustible haute température comprenant un empilement vertical de cellules planaires élémentaires séparées par des plaques d'interconnexion, des joints brasés étanches aux gaz réalisant l'assemblage des cellules et des plaques d'interconnexion, dans lequel lesdits joints sont réalisés entre les interconnecteurs et les électrodes poreuses, et dans lequel l'infiltration de la composition de brasure dans les électrodes poreuses est parfaitement contrôlée, dans toutes les directions, et notamment latéralement, de façon à assurer un assemblage mécaniquement solide de l'ensemble de l'empilement « stack » et à ne pas diminuer la surface électrochimiquement active des électrodes.

Il existe encore un besoin pour un tel procédé qui permette de parfaitement contrôler de manière simple et fiable, la chaîne de cotes de l'empilement, telle que son épaisseur totale, pour maintenir ainsi tous les contacts électriques entre les plaques d'interconnexion et les électrodes.

Il existe, en particulier, un besoin pour un procédé permettant de fabriquer des empilements dans lesquels les joints brasés ne présentent aucune surépaisseur, en d'autres termes dans lesquels la partie supérieure ou inférieure de ces joints reste dans le plan des électrodes qui est aussi celui de la plaque d'interconnexion (ou du support céramique) à assembler.

Il existe également un besoin pour un tel procédé qui soit simple, fiable, ne comporte qu'un nombre limité d'étapes et qui évite de faire appel à des étapes complexes, difficiles à maîtriser, ou coûteuses.

Le but de la présente invention est de fournir un procédé de fabrication d'un électrolyseur haute température comprenant un empilement vertical de n cellules planaires élémentaires en alternance avec n + 1 plaques d'interconnexion, chacune des cellules élémentaires étant constituée par une anode et une cathode poreuses planes respectivement disposées sur chacune des faces d'un électrolyte dense plan, et des joints étant prévus à des points de contact entre les cellules élémentaires et les plaques d'interconnexion, qui réponde aux besoins énumérés ci-dessus.

Le but de la présente invention est, en outre, de fournir un tel procédé qui ne présente pas les inconvénients, limitations, défauts et désavantages des procédés de l'art antérieur et qui résolve les problèmes des procédés de l'art antérieur.

### EXPOSÉ DE L'INVENTION

Ce but et d'autres encore sont atteints, conformément à l'invention, par un procédé de fabrication d'un électrolyseur haute température « EHT » ou d'une pile à combustible « SOFC » comprenant un empilement vertical de n cellules planaires élémentaires en alternance avec n + 1 plaques d'interconnexion, chacune des cellules élémentaires étant constituée par une anode et une cathode poreuses planes respectivement disposées sur chacune des faces d'un électrolyte dense plan, et des joints brasés étant prévus à des points de contact entre les cellules élémentaires et les plaques d'interconnexion, procédé dans lequel on réalise les étapes successives suivantes :
a) on prépare respectivement une anode ajourée et une cathode ajourée sur chacune des faces de l'électrolyte, de façon à laisser des premières zones de surface de chacune des faces de l'électrolyte correspondant aux jours non couvertes par l'anode ou la cathode, ces premières zones non couvertes délimitant une ou des seconde(s) zone(s) de surface de chacune des faces de l'électrolyte couverte(s) par l'anode ou la cathode aux emplacements prévus des joints brasés, moyennant quoi on obtient une cellule élémentaire comprenant une anode et une cathode ajourées, chacune avec une épaisseur ;
b) on dépose une couche de composition de brasure sur les surfaces de l'anode et de la cathode correspondant aux secondes zones, la quantité de composition de brasure étant telle que, à l'état fondu, elle remplisse toute la porosité dans l'épaisseur de l'anode ou de la cathode jusqu'à la surface de l'électrolyte dans les secondes zones, sans qu'elle dépasse au-delà de la surface de l'anode ou de la cathode d'une épaisseur de plus de 20% de l'épaisseur de l'anode ou de la cathode, moyennant quoi on obtient une cellule élémentaire pourvue d'une composition de brasure ;
c) on répète n fois les étapes a) et b) ;
d) on empile verticalement successivement une plaque d'interconnexion puis une cellule ;
e) on répète l'étape d) n fois, puis on empile une dernière ou n + 1^{ème} plaque d'interconnexion ;
f) on chauffe l'empilement formé par les cellules élémentaires pourvues de la composition de brasure et les plaques d'interconnexion à une température de brasage suffisante pour faire fondre la composition de brasure, moyennant quoi la composition de brasure remplit toute la porosité dans l'épaisseur de l'anode ou de la cathode depuis leur surface jusqu'à la surface de l'électrolyte dans les secondes zones, sans qu'elle dépasse au-delà de la surface de l'anode ou de la cathode d'une épaisseur de plus de 20% de l'épaisseur de l'anode ou de la cathode ;
g) on refroidit l'empilement depuis la température de brasage jusqu'à la température ambiante moyennant quoi les électrolytes et les interconnecteurs sont assemblés par les joints brasés.

Avantageusement, dans l'étape b) la quantité de composition de brasure est telle que, à l'état fondu, elle ne dépasse pas au-delà de la surface de l'anode ou de la cathode ; et dans l'étape f), la composition de brasure ne dépasse pas au-delà de la surface de l'anode ou de la cathode.

Généralement, préalablement à l'étape d), on met en place sur un support, une plaque terminale inférieure de l'empilement, et suite à l'étape e) on met en place une plaque supérieure terminale de l'empilement.

Selon un premier mode de préparation des électrodes ajourées, l'anode et la cathode ajourées peuvent être préparées en déposant sélectivement une couche d'une suspension d'un matériau d'anode, respectivement de cathode, par exemple par sérigraphie au moyen d'un masque, seulement sur lesdites secondes zones de chacune des faces de l'électrolyte puis en frittant lesdites couches.

Ainsi, avantageusement, on peut déposer une couche d'une suspension d'un matériau de cathode sur une face, de préférence la face supérieure de l'électrolyte, et fritter ladite couche, puis on peut déposer une couche d'une suspension d'un matériau d'anode sur l'autre face, de préférence la face inférieure de l'électrolyte, et fritter ladite couche.

Selon un second mode de réalisation des électrodes ajourées, l'anode et la cathode ajourées peuvent être préparées en préparant une anode et une cathode complètes non ajourées par exemple par sérigraphie puis frittage, et en créant ensuite les jours par élimination de matière par exemple par ablation laser ou usinage.

Avantageusement, l'électrolyte, l'anode et la cathode peuvent être des disques, de préférence avec un axe central commun, de préférence de même diamètre, et deux anneaux concentriques peuvent former les premières zones de part et d'autre d'un troisième anneau formant la seconde zone.

Avantageusement, la composition de brasure peut être déposée sur les secondes zones par sérigraphie au moyen d'un masque, ou bien manuellement ou avec un robot au moyen d'une seringue et d'un dispenseur pneumatique.

Avantageusement, l'électrolyte a une épaisseur de 5 à 200 µm, de préférence de 50 à 150 µm, de préférence encore de 90 µm.

Généralement, l'électrolyte est en un matériau dense qui peut présenter une porosité inférieure à 10 % en volume.

Avantageusement, l'électrolyte peut être en un matériau choisi parmi les céramiques oxydes dopées telles que la zircone yttriée, la zircone scandiée et la manganite de lanthane strontiée dopée au cérium.

Avantageusement, l'anode et la cathode peuvent avoir une épaisseur de 10 à 70 µm, de préférence de 40 µm.

Avantageusement, l'anode et la cathode peuvent être en un matériau poreux présentant une porosité, par exemple de 30 à 50 % en volume.

Avantageusement, l'anode et la cathode peuvent être indépendamment l'une de l'autre en un matériau choisi parmi le cermet Oxyde de Nickel-Oxyde de Cérium Gadolinié (NiO-CGO), la Manganite de Lanthane Strontiée (La₁₋ₓSrₓMn_{Y}O_{3-δ} ou LSM), le cermet NiO- Zircone yttriée YSZ, les nickelates (La₄Ni₃O₁₀, La/Nd₂NiO₄), les chromo-manganites (LaCeSrCrMnO), les ferrites (La_{1-X}Sr_{X}Fe_{Y}O_{3-δ}), les cobaltites (La_{1-X}Sr_{X}CO_{Y}O_{3-δ}) et les titanates (La₄Srₙ₋₄TiₙO_{3n+2-δ}) .

Avantageusement, l'étape f) ou étape de brasage peut être réalisée sous air.

Avantageusement, l'anode, la cathode et l'électrolyte ont des surfaces planes identiques, et de préférence qui coïncident, et il n'y a donc aucune perte de surface active.

Bien que certaines demandes de brevet déjà mentionnées plus haut, à savoir WO-A1-2006/086037 ; WO-A2-2006/127045 ; WO-A2-2007/062117 mentionnent la possibilité de braser des électrodes poreuses, aucune démonstration de la faisabilité d'un tel procédé sans dégradation des électrodes n'est faite à l'échelle du grain.

Le procédé selon l'invention comporte une suite spécifique d'étapes qui n'a jamais été décrite ni suggérée dans l'art antérieur.

Dans la littérature, l'utilisation d'un métal, d'un alliage métallique ou d'une brasure liquide pour infiltrer un matériau poreux et former un matériau composite métal/métal ou métal/céramique à propriétés particulières notamment quant aux caractéristiques électriques, mécaniques, thermiques, ou au poids etc. est certes couramment décrite. Cette opération est parfois suivie d'une opération de brasage du matériau ainsi formé avec un second matériau. Il s'agit donc d'un procédé qui présente l'inconvénient de comporter deux étapes.

L'infiltration d'un métal ou d'un alliage métallique liquide dans un poreux ou une mousse peut aussi avoir pour but de boucher la porosité du poreux de façon à le densifier et/ou le rendre hermétique, comme cela est décrit dans le brevet US-B1-6,355,356, mais, dans ce brevet, l'alliage liquide n'est pas utilisé pour braser un troisième composant.

L'infiltration peut aussi avoir le double objectif de remplir la porosité d'un matériau poreux ou d'une mousse métallique ou céramique et de l'assembler mécaniquement, en une même opération, avec un troisième matériau comme cela est divulgué dans la demande de brevet WO-A2-91/13462 et dans le brevet US-B2-6,490,146. Dans ces documents, aucune fonction d'étanchéité n'est ni mentionnée ni recherchée et aucune méthode visant à contrôler l'infiltration du métal liquide et à l'empêcher dans certaines zones n'est indiquée.

Le procédé selon l'invention répond, entre autres, à l'ensemble des besoins énumérés plus haut, ne présente pas les inconvénients des procédés de l'art antérieur, et apporte une solution aux problèmes des procédés de l'art antérieur.

Selon l'invention l'infiltration de la brasure dans toutes les directions est parfaitement maîtrisée, contrôlée, d'une part par la mise en oeuvre d'électrodes ajourées pourvues de jours qui délimitent les zones d'électrode sur lesquelles la composition de brasure est appliquée puis fondue, et d'autre part par l'utilisation d'une quantité de composition de brasure spécifique, déterminée telle que, à l'état fondu, elle remplisse toute la porosité dans l'épaisseur de l'anode ou de la cathode jusqu'à la surface de l'électrolyte dans lesdites secondes zones, sans dépasser au-delà de la surface « libre » de l'anode ou de la cathode dans ces secondes zones d'une « hauteur » égale à plus de 20 % de l'épaisseur de l'anode ou de la cathode, et de préférence sans dépasser du tout au-delà de la surface « libre » de l'anode ou de la cathode.

En utilisant, conformément à l'invention, des électrodes ajourées, présentant des jours, ouvertures, l'infiltration latérale de la composition de brasure, alliage de brasage, est maîtrisée et contrôlée car ces jours permettent de stopper la progression latérale de la composition de brasure liquide.

Selon l'invention, l'alliage de brasage remplit la porosité des électrodes selon leur épaisseur qui est généralement de 10 à 70 µm et atteint l'électrolyte sans s'infiltrer latéralement dans les électrodes sur des distances généralement supérieures à 1000 µm, et en outre la partie supérieure ou inférieure des joints reste dans le plan des électrodes qui est aussi celui des plaques d'interconnexion. Cela est rendu possible selon l'invention en utilisant une quantité déterminée de composition de brasure qui est généralement inférieure ou égale au volume des pores à remplir dans le volume défini par la surface desdites secondes zones de l'électrolyte, la surface correspondante des électrodes et l'épaisseur de l'électrode.

Selon l'invention, la quantité de composition de brasure est donc calculée de telle sorte que la composition de brasure liquide atteigne l'interface entre l'anode ou la cathode et l'électrolyte en tenant compte de la porosité de l'anode ou de la cathode et aussi de telle sorte qu'il ne reste qu'une quantité de brasure en surface dont l'épaisseur correspond à une épaisseur inférieure ou égale à 20% de l'épaisseur des électrodes (anode ou cathode). De préférence, il est souhaitable qu'il ne reste plus de brasure en surface de la cathode ou de l'anode, c'est-à-dire que la composition de brasure ne dépasse pas au-delà de la surface de la cathode ou de l'anode.

La quantité de brasure à ajouter est calculée à partir de la densité de la brasure et du volume à infiltrer, défini par les largeurs et épaisseurs minimales de la ou des seconde(s) zone(s) et la porosité minimale des électrodes.

Selon l'invention, les joints ne présentent donc qu'une surépaisseur limitée, voire aucune surépaisseur, il n'est pas nécessaire d'avoir recours à des opérations longues et complexes pour compenser cette surépaisseur et l'on obtient facilement en, un nombre limité d'étapes, un empilement respectant précisément la chaîne des cotes.

Le procédé selon l'invention permet d'obtenir un empilement étanche aux gaz répondant aux critères de débit de fuite, et mécaniquement solide.

Notamment, le procédé selon l'invention permet d'assembler une cellule d'épaisseur constante, aux défauts de planéité près, avec les interconnecteurs et d'obtenir des joints Cellule/Interconnecteur étanches aux gaz par exemple à des différentiels de pression de 200 mbar de 20°C à 900°C. Le débit de fuite mesuré est par exemple sous air inférieur à 10⁻³ Nml/min/mm à 900°C.

En résumé :
- le procédé selon l'invention permet d'assurer la maîtrise de la chaîne de cotes d'un « stack » d'électrolyse de l'eau à haute température ou d'une pile à combustible haute température, par l'intermédiaire de joints étanches aux gaz obtenus au moyen d'une brasure infiltrée dans les électrodes de la cellule,
- le procédé d'assemblage est réalisé en une seule étape et avantageusement sous air,
- l'assemblage et l'étanchéité sont réalisés en une seule opération sans ajouter de surépaisseur aux pièces à empiler, ce qui permet de contrôler l'épaisseur totale de l'empilement,
- le design des électrodes permet de contrôler la distance d'infiltration de la composition de brasure ou alliage de brasage,
- le procédé selon l'invention est simple, fiable, et d'un faible coût. En particulier, le dépôt des électrodes et de la brasure par sérigraphie est un procédé peu onéreux, utilisé couramment dans l'industrie.

D'autres effets et avantages de l'invention apparaitront mieux à la lecture de la description détaillée qui va suivre, faite en référence aux dessins joints dans lesquels :

### BRÈVE DESCRIPTION DES DESSINS

- La figure 1 est une vue schématique en coupe verticale d'une cellule élémentaire d'un électrolyseur haute température (« EHT ») ;
- La figure 2 est une vue schématique en coupe verticale d'un réacteur élémentaire ou module élémentaire d'un électrolyseur haute température (« EHT ») ;
- La figure 3 est une vue schématique en coupe verticale d'un électrolyseur haute température classique comprenant un empilement de modules élémentaires ;
- La figure 4 est une vue schématique en coupe verticale d'un module élémentaire d'un électrolyseur haute température classique qui montre les joints étanches entre la cellule et les interconnecteurs inférieur et supérieur ;
- La figure 5 est une vue schématique en coupe verticale d'un dispositif de coulage en bande non continu ;
- La figure 6 est une vue schématique en coupe verticale illustrant le principe du dépôt par sérigraphie ;
- La figure 7 est une vue de dessus d'une cellule d'un électrolyseur haute température comprenant une électrode ajourée déposée sur un électrolyte en forme de disque;
- La figure 8A est une vue schématique en coupe verticale avant brasage selon l'invention d'un module élémentaire d'un empilement « EHT » qui montre les cordons de brasure déposés sur les électrodes ;
- La figure 8B est une vue schématique en coupe verticale du module de la figure 8 A après brasage selon l'invention qui montre l'infiltration de la brasure dans la porosité des électrodes ;
- La figure 9 est une vue schématique en coupe verticale d'un module élémentaire d'un empilement d'un électrolyseur haute température ou d'une « SOFC » fabriqué par le procédé selon l'invention ;
- La figure 10 est une vue schématique en coupe verticale d'un empilement d'un électrolyseur haute température ou d'une « SOFC » fabriqué par le procédé selon l'invention ;
- La figure 11 est une photographie illustrant l'exemple 2 qui montre des bandes de brasure en Ag-Cu, grises, de largeur 1 mm et de longueur 5 mm superposées sur des motifs en LSM, noirs, d'épaisseur 50 µm, de longueur 5 mm et de différentes largeurs (1 mm, 1,5 mm, 2 mm, 2,5 mm et 2,9 mm) ;
- La figure 12 est une photographie prise en microscopie électronique à balayage (MEB) d'une coupe du motif en LSM de largeur 1 mm, infiltré par Ag-Cu, présenté sur la figure 11.

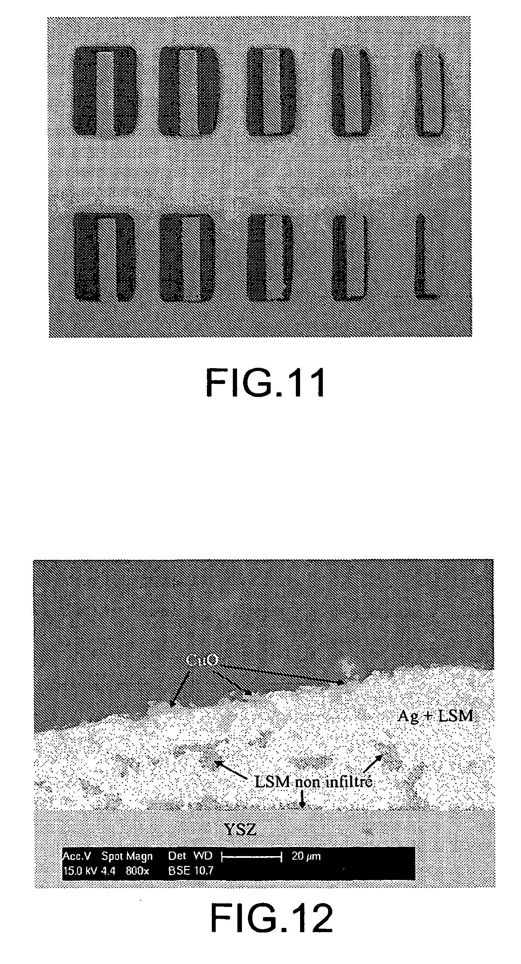

L'échelle indiquée sur la figure 12 représente 20 µm.

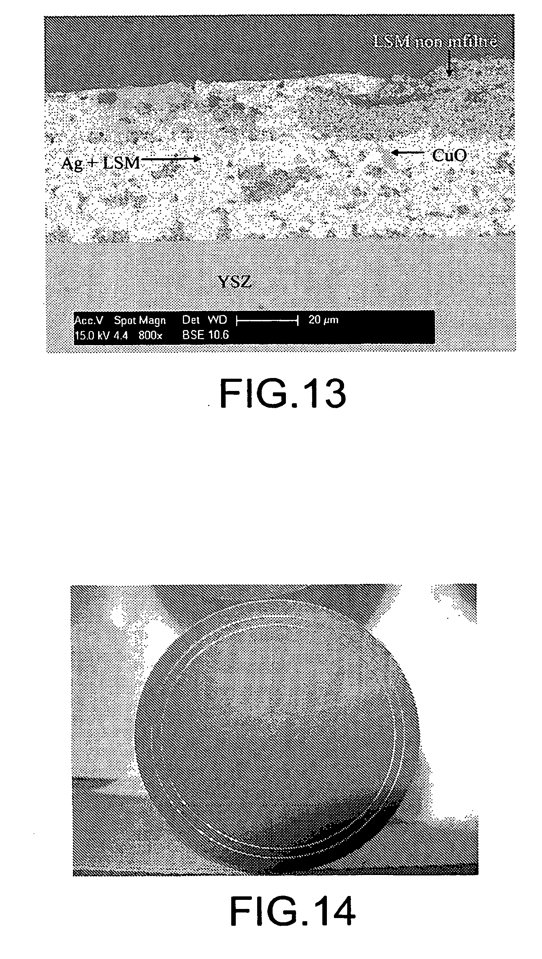

- La figure 13 est une photographie prise en microscopie électronique à balayage (MEB) d'une coupe du motif en LSM de largeur 1,5 mm, infiltré par Ag-Cu, présenté sur la figure 11.

L'échelle indiquée sur la figure 13 représente 20 µm.
- La figure 14 est une photographie qui montre l'électrode en LSM munie de deux ajours annulaires préparée dans l'exemple 3 ;

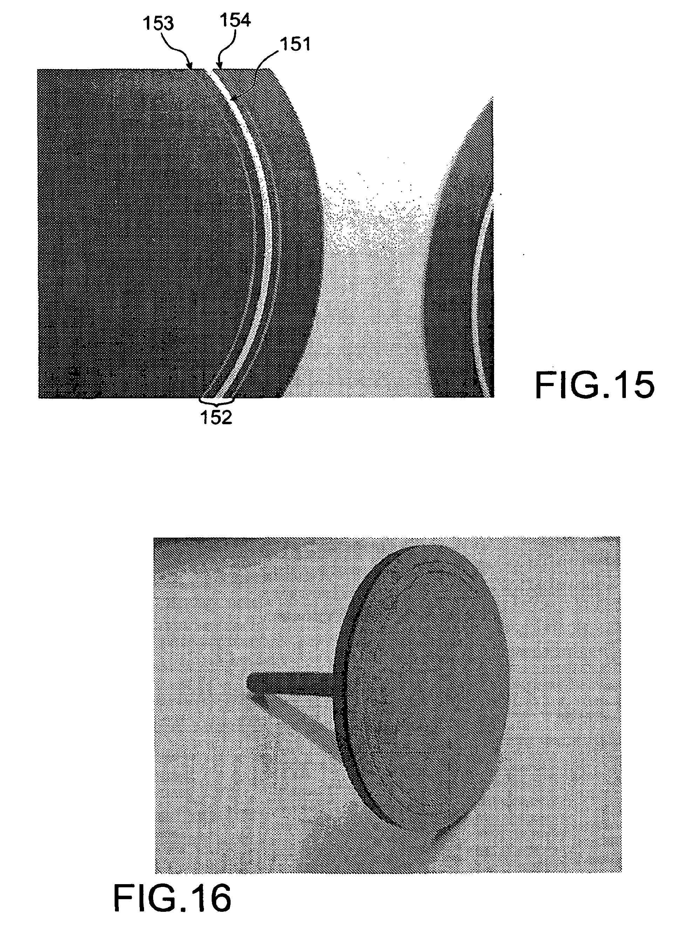

- La figure 15 est une photographie montrant le cordon de pâte de brasure Ag-3Cu déposé au centre de la zone située entre les deux ajours de l'électrode en LSM préparée dans l'exemple 3 et montrée sur la figure 14 ;
- La figure 16 est une photographie d'une maquette, pièce préparée par brasage de la cellule présentée sur la Figure 15 (Exemple 3), d'une pièce emboutie en Crofer22APU et d'une pièce de 2,5 mm d'épaisseur en Crofer 22APU.

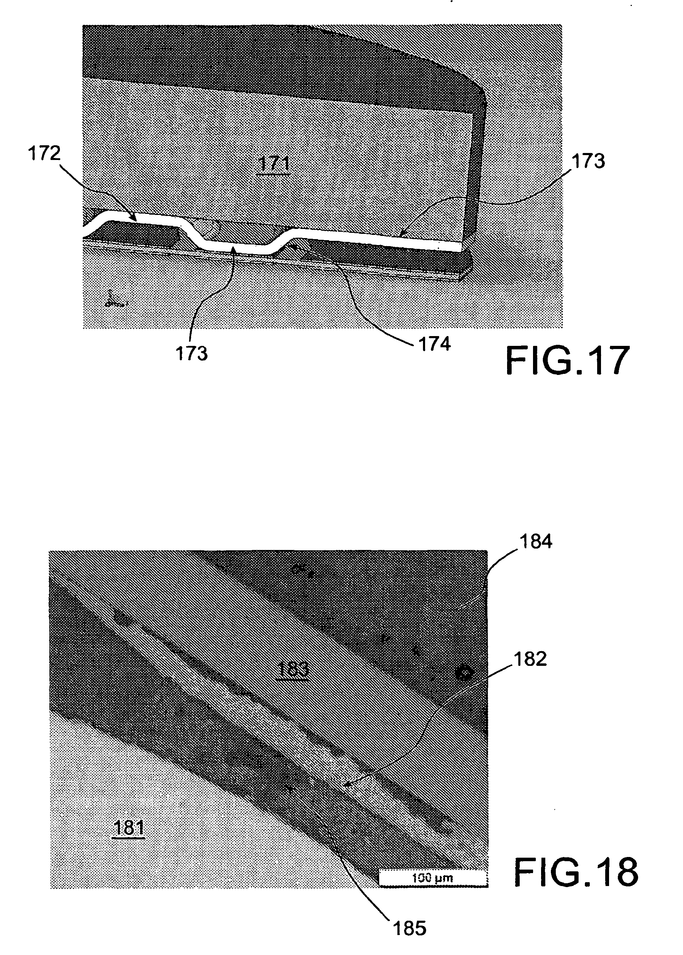

- La Figure 17 est une vue CAO en coupe de la maquette, pièce présentée sur la figure 16.
- La figure 18 est une photographie prise en microscopie optique d'une pièce obtenue par découpage de la pièce présentée sur les figures 16 et 17.

L'échelle indiquée sur la figure 18 représente 100 µm.

### EXPOSÉ DÉTAILLÉ DE MODES DE RÉALISATION PARTICULIERS

Dans une première étape du procédé selon l'invention, on prépare les cellules planaires anode/électrolyte/cathode de l'électrolyseur qui sont constituées par deux électrodes, à savoir une anode et une cathode entre lesquelles est disposé un électrolyte solide plan comprenant deux faces, à savoir une face supérieure et une face inférieure.

En d'autres termes, l'anode d'une part et la cathode d'autre part prennent « en sandwich » l'électrolyte solide et sont chacune directement en contact avec l'une des faces de l'électrolyte.

La fabrication des cellules planaires Anode / électrolyte / cathode est réalisée par un procédé connu de l'homme du métier.

Tout d'abord on fabrique l'électrolyte, qui se présente généralement sous la forme d'une plaque, couche mince, plane d'une épaisseur généralement de 50 µm à 200 µm, de préférence de 80 à 90 µm.

L'électrolyte est généralement en un matériau choisi parmi les céramiques, de préférence parmi les céramiques oxydes dopées telles que la zircone yttriée par exemple à 3% mol de Y aussi dénommée 3YSZ, la zircone scandiée aussi dénommée ScSZ, et la manganite de lanthane strontiée dopée au cérium.

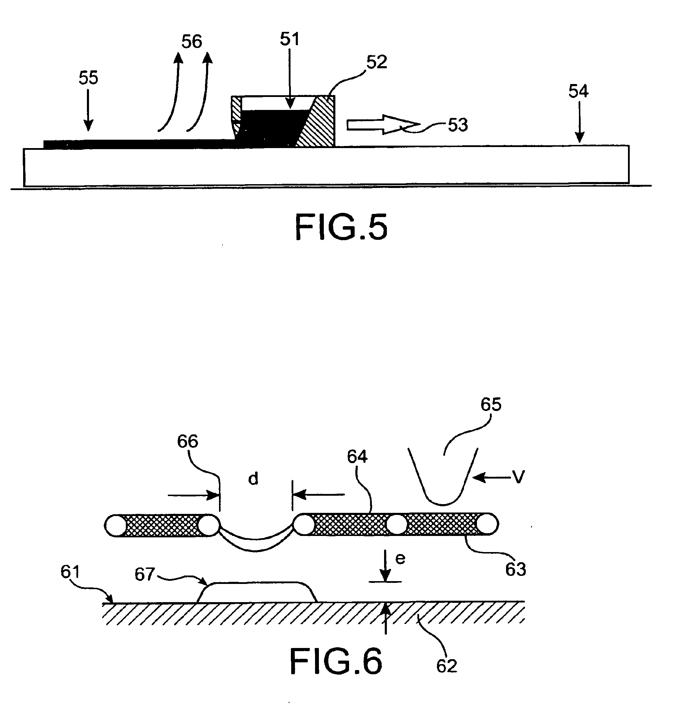

L'électrolyte peut être préparé par exemple par coulage en bande non continu au moyen d'un banc de coulage, comme cela est représenté sur la figure 5.
- Le coulage en bande est une technique bien connue de l'homme du métier pour déposer des couches minces à partir d'une suspension d'une poudre notamment de céramique(s). Plus précisément, une suspension (51) d'une poudre de la céramique dans un solvant adéquat tel que l'éthanol est contenue dans un réservoir d'un sabot mobile (52), que l'on déplace (53) en translation sur un support fixe (54) plan, on forme ainsi une bande coulée (55) qui sèche par évaporation (56) du solvant pour donner une bande « crue » généralement de l'épaisseur précisée plus haut de 50 µm à 200 µm, de préférence de 80 à 90 µm.

On découpe ensuite la pièce crue obtenue à l'issue du coulage en bande aux formes et aux dimensions souhaitées au moyen par exemple d'un emporte-pièce ou d'un laser au gaz carbonique.

La pièce crue peut avoir une forme de polygone, par exemple une forme de rectangle ou de carré, ou bien encore une forme de disque. Elle peut comporter des trous débouchant pour la circulation des gaz.

La surface de la pièce constituant l'électrolyte ou plutôt de la surface du plan principal de celle-ci est généralement 100 cm² à 500 cm², de préférence de 225 à 400 cm².

Puis l'électrolyte est fritté. Ce frittage peut avoir lieu dans un four par exemple sous air. La température du frittage peut être généralement de 1400°C à 1600°C, par exemple de 1500°C environ par exemple pour le « 3YSZ ».

Cette opération de frittage permet d'éliminer les composants organiques par évaporation, et d'agglomérer les grains entre eux pour former un matériau dense, à savoir présentant une porosité généralement inférieure à 10%.

On procède ensuite à la fabrication des électrodes sur chacune des faces de l'électrolyte.

On commence par fabriquer une première électrode sur l'une des faces de l'électrolyte.

Par exemple, on peut commencer par fabriquer la cathode sur la face supérieure de l'électrolyte.

Puis on fabrique une seconde électrode sur l'autre face de l'électrolyte. Par exemple, on pourra ainsi fabriquer l'anode sur la face inférieure de l'électrolyte.

Pour fabriquer les électrodes selon l'invention, on peut procéder tout d'abord au dépôt multicouche d'une suspension du matériau qui constitue l'électrode sur une face de l'électrolyte puis réaliser un frittage du dépôt généralement sous air.

Par multicouche, on entend une succession de matériaux identiques ou différents présentant éventuellement un gradient de composition et/ou de porosité. L'homme du métier sait comment préparer de telles multicouches.

Les matériaux préférés pour la cathode « EHT » (anode en mode « SOFC ») et l'anode EHT (cathode en mode SOFC) sont, respectivement, le cermet Oxyde de Nickel-Oxyde de Cérium Gadolinié (NiO-CGO) et la Manganite de Lanthane strontiée (La₁₋ₓSrₓMn_{Y}O_{3-δ} ou LSM).

Il s'agit des matériaux les plus couramment utilisés aujourd'hui industriellement en mode « SOFC », mais de nombreux autres matériaux et combinaisons peuvent être envisagés, tels que le cermet NiO-YSZ, les nickelates (La₄Ni₃O₁₀, La/Nd₂NiO₄), les chromo-manganites (LaCeSrCrMnO), les ferrites (La_{1-X}Sr_{X}Fe_{Y}O_{3-δ}), les cobaltites ((La_{1-X}Sr_{X}Co_{Y}O_{3-δ}) ou les titanates (La₄Srₙ₋₄TiₙO_{3n+2-δ}).

Le dépôt de ces suspensions peut être réalisé par toute technique adéquate. L'épaisseur du dépôt est telle qu'elle permet d'obtenir des électrodes d'une épaisseur de 10 à 70 µm par exemple de 40 µm.

Toutefois, selon l'invention le dépôt des couches d'électrode est généralement réalisé par sérigraphie au moyen d'une sérigraphieuse ou appareil de sérigraphie.

Le principe de la sérigraphie est présenté sur la figure 6. Il consiste à déposer sur une face (61) de l'électrolyte (62), au moyen d'un masque métallique (63) muni de mailles (64), d'une taille par exemple d'environ 40 µm, et d'une râcle (65) se déplaçant à une vitesse V, une suspension ou encre qui comprend généralement une ou plusieurs poudres inorganique(s) -cette ou ces poudres étant constituée(s) par le ou les matériaux constituant l'électrode- et une partie organique constituée par un ou plusieurs composés organiques tels que des liants, des dispersants, et des plastifiants.

Avantageusement, le masque est pourvu d'ouvertures (66), par exemple d'une largeur d qui permettent de réaliser un dépôt sélectif sur des zones définies de l'électrolyte (secondes zones) en laissant des zones non couvertes. On obtient ainsi un dépôt sérigraphié de préférence sélectif (67) d'une épaisseur e sur la surface de l'une des faces de l'électrolyte.

Ainsi dans le cas de la cathode, on pourra élaborer et déposer une encre à base de NiO et de CGO et dans le cas de l'anode, on pourra élaborer puis déposer une encre à base de LSM.

Le frittage est réalisé à une température qui peut être facilement déterminée par l'homme du métier.

A titre d'exemple, on pourra réaliser le dépôt d'une suspension d'un premier matériau d'électrode par exemple du matériau de cathode sur une des faces de l'électrolyte puis fritter le dépôt de la suspension du premier matériau à une température par exemple de 1200°C dans un four sous air, pour obtenir ainsi une demi-cellule électrolyte-cathode.

On pourra ensuite déposer une suspension d'un second matériau d'électrode par exemple du matériau d'anode sur l'autre face de l'électrolyte puis fritter le dépôt de suspension du second matériau, à une température par exemple de 1050°C dans un four sous air, pour obtenir ainsi une cellule complète.

Les traitements thermiques de frittage permettent d'éliminer la partie organique et de lier l'électrolyte et les électrodes.

Selon l'invention, les électrodes fabriquées doivent être des électrodes ajourées c'est-à-dire des électrodes présentant des jours ou ouvertures, découpes, qui les traversent de part en part dans le sens de l'épaisseur. Ces jours définissent, sur chacune des faces de l'électrolyte des zones de surface non couvertes par l'anode ou la cathode, ces premières zones non couvertes délimitant une ou des seconde(s) zone(s) de surface couverte(s) par l'anode ou la cathode dites zones « pleines », aux emplacements des joints brasés à réaliser.

Ces jours peuvent avoir une forme quelconque mais il est important qu'ils délimitent exactement la ou les dites secondes zones pour que la composition de brasure liquide soit bien confinée dans ces secondes zones et ne puisse s'en échapper latéralement c'est-à-dire dans le plan de l'électrode.

Dans un premier mode de réalisation pour réaliser ces jours, on pourra déposer de manière sélective les suspension ou encre décrites plus haut de manière à ce que le dépôt ne soit pas effectué sur ces premières zones de l'électrolyte.

Par exemple l'utilisation de masques de sérigraphie spécifiques peut permettre de ne pas déposer l'encre de sérigraphie dans des premières zones de part et d'autre de la seconde zone qui sera en contact avec l'alliage de brasage.

Dans le cas d'une cellule à électrolyte support en forme de disque par exemple d'un diamètre de 120 mm, les électrodes sont typiquement, dans l'art antérieur des disques par exemple d'un diamètre de 110 mm et d'une épaisseur de 40 µm. Les cellules peuvent également être carrées ou rectangulaires.

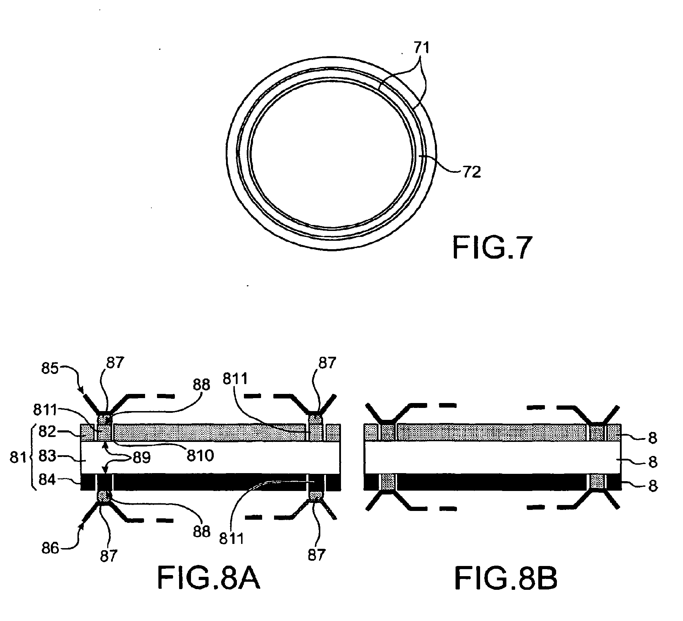

Avec des masques de sérigraphie adaptés, on peut déposer comme cela est montré sur la figure 7 des électrodes d'un diamètre identique à celui de l'électrolyte, par exemple 120 mm, et ne pas déposer de matière sur deux anneaux (71) de largeur A par exemple de 10 à 500 µm, de part et d'autre d'un anneau d'électrode (72) de largeur B par exemple de 50 µm à 1 mm.

Suite au dépôt sélectif, on procède bien évidemment à un frittage dans les conditions déjà décrites plus haut.

Dans un second mode de réalisation pour réaliser les jours, on peut fabriquer des électrodes complètes non ajourées sur l'électrolyte, c'est-à-dire que les électrodes recouvrent toute la surface sous jacente de l'électrolyte, la surface des électrodes étant généralement identique à celle de l'électrolyte et coïncidant généralement avec celle-ci. Ces électrodes complètes peuvent être fabriquées par exemple par dépôt d'une suspension ou encre par exemple par sérigraphie puis frittage.

On réalise ensuite une élimination de matière pour créer les jours, premières zones dans les électrodes complètes. L'élimination de matière peut se faire par exemple par ablation laser ou usinage.

Dans le cas d'une ablation laser, le laser au gaz carbonique est programmé pour balayeur la surface que l'on souhaite éliminer qui correspond aux jours de l'électrode. La matière est éliminée par photoablation, qui consiste, grâce à la puissance thermique délivrée par le laser, à évaporer la matière dans les zones sélectionnées.

Dans la cellule à électrodes ajourées mise en oeuvre selon l'invention, la surface des électrodes dans leur plan principal est généralement avantageusement identique à celle de l'électrolyte et coïncide généralement avec celle-ci. En d'autres termes, les électrodes et l'électrolyte coïncident, sont parfaitement superposés et ont globalement la même surface (abstraction faite des joints), ceci est un avantage par rapport à l'art antérieur dans lequel les dimensions des électrodes et notamment de la cathode peuvent être réduites pour pouvoir braser l'interconnecteur sur l'électrolyte, et la surface active se trouve ainsi diminuée.

Selon l'invention, une cellule à électrodes ajourées ayant été réalisée comme décrit ci-dessus, on dépose ensuite une couche de composition de brasure sur les surfaces de l'anode et de la cathode qui recouvrent les secondes zones de chacune des faces de l'électrolyte délimitées par les premières zones non couvertes, la quantité de composition de brasure étant telle que, à l'état fondu, elle remplisse toute la porosité dans l'épaisseur de l'anode ou de la cathode jusqu'à la surface de l'électrolyte dans la ou les seconde(s) zone(s) de surface, sans qu'elle dépasse au-delà de la surface de l'anode ou de la cathode d'une épaisseur supérieure à 20% de l'épaisseur de l'anode ou de la cathode ; moyennant quoi, on obtient une cellule élémentaire pourvue d'une composition de brasure, sur les secondes zones déterminées de la surface des électrodes correspondant aux emplacements des joints brasés assurant l'assemblage entre les électrodes et les plaques d'interconnexion et l'étanchéité.

De préférence, la quantité de composition de brasure est telle qu'elle ne dépasse pas du tout au-delà de la surface de l'anode ou de la cathode tout en arrivant jusqu'à cette surface, en d'autres termes en affleurant cette surface de l'anode ou de la cathode.

Le dépôt de la composition de brasure peut se faire par toute technique adéquate, la sérigraphie étant cependant une technique préférée.

Ainsi si l'on se réfère à la figure 7, on pourra déposer, par exemple par sérigraphie, un cordon de brasure de largeur C par exemple de 50 µm à 1 mm au-dessus de l'anneau d'électrode (72) de largeur B.

Pour cela, on utilise un masque de sérigraphie qui, positionné au-dessus de la cellule précédemment préparée, permet de déposer une couche de brasure de largeur C sur l'anneau d'électrode (72) de largeur B.

La quantité linéique de brasure déposée par sérigraphie est de l'ordre de 0,05 mg/mm.

La composition de brasure comprend généralement une poudre des éléments destinés à constituer la brasure mis en suspension de manière classique dans un liant, cément organique liquide, de préférence à la fois visqueux et collant, afin d'obtenir une pâte, suspension, ou encre permettant un étalement homogène sur les surfaces des joints à braser. Le liant peut ainsi être choisi pour assurer une viscosité de la composition de brasure d'environ 500 Pa.s à une vitesse de 1 tour/min et à 25°C (Rhéomètre Brookfield RVT/ABZ « Spindle »).

Le liant, cément, se décompose généralement par exemple entre 100 et 300°C sans laisser de traces. Il peut s'agir par exemple d'un liant à base de polyvinyle butyral et d'acétates.

La brasure préférée contient des poudres d'Argent et de Cuivre par exemple dans un rapport 97/3 en masse mélangées à des liants organiques par exemple à environ 20% en masse.

L'épaisseur de brasure déposée est par exemple (voir figure 8A) d'environ 50 µm pour une largeur typique de 0,5 mm.

Cette brasure présente une bonne mouillabilité sur les électrodes, avec des angles de contact de 15° et 33° respectivement sur LSM et NiO-CGO sous air à 1050°C. D'autres compositions de brasure adaptées au brasage sous air peuvent être envisagées dans les systèmes Ag-Cu, Ag-CuO, Ag-Cu-Ti, Ag-CuO-TiO₂, Ag-Cu-Al ou Ag-CuO-Al₂O₃; cette liste d'alliage n'est pas exhaustive. Ils présentent tous l'avantage d'adhérer sur de nombreuses céramiques oxydes, incluant YSZ, et sur la surface oxydée de nombreux métaux, incluant ceux utilisés pour les interconnecteurs.

La brasure peut être déposée par d'autres techniques telles qu'un robot ou une dépose manuelle à la seringue.

Le robot utilisé peut être par exemple un robot 3 axes de type SCARA^{®} JSR4400N couplé à un distributeur pneumatique EFD Ultra^{®} 2400 et muni d'une seringue dans laquelle est placée la pâte de brasure à déposer. La pression d'éjection, la température et la distance Seringue-Electrode sont les paramètres à ajuster pour faire varier la qualité du dépôt.

La quantité linéique minimale de brasure déposée par le robot pour obtenir un dépôt régulier est au minimum de 0,2 mg/mm.

La dépose manuelle, au moyen d'une seringue et d'un distributeur pneumatique, est beaucoup moins régulière que les dépôts réalisés au robot.

La méthode de dépôt préférée est donc la sérigraphie qui permet de déposer les plus faibles quantités de brasure.

On prépare de la même manière que celle décrite ci-dessus n cellules pourvues de composition de brasure si l'on souhaite fabriquer un empilement de n cellules, n est un nombre entier de 100 à 1000, par exemple 500.

La suite du procédé et notamment l'opération de brasage se déroulent généralement de la façon suivante :
- on met en place, par exemple dans un four sous air sur un support, la plaque terminale inférieure de l'empilement, « stack » de l'électrolyseur haute température ;
- on empile verticalement, en alternance, une plaque d'interconnexion et une cellule munie de sa (ou ses) couche(s) déposée(s) de brasure,
- l'opération précédente est répétée n fois si le stack est constitué de n cellules, puis on dispose une dernière plaque d'interconnexion (n + 1) sur la n^{ième} cellule;
- on met en place sur l'empilement la plaque terminale supérieure de l'empilement « stack » ;
- des outillages placés à l'extérieur de l'empilement, stack, permettent d'assurer un bon alignement des différentes couches de l'empilement ; un poids placé sur l'empilement peut être ajouté pour faciliter la mise en contact des pièces lors du brasage ;
- on réalise ensuite le brasage proprement dit.

Pour cela, on peut par exemple augmenter la température du four depuis la température ambiante, par exemple 20°C, jusqu'à la température de brasage comprise par exemple entre 950°C et 1050°C.

Cette augmentation de température peut se faire par exemple à une vitesse de 0,5°C/min. Cette rampe de montée en température peut en outre éventuellement inclure un palier de déliantage (pour éliminer le liant organique) de la brasure par exemple à une température de 300 à 500°C pendant une durée de 1 heure et/ou un autre palier pour l'homogénéisation thermique de l'empilement par exemple à une température de 800 à 900°C, pendant une durée, par exemple de 10 minutes à 2 heures. L'empilement est muni de plusieurs thermocouples permettant de contrôler la température en différents points.

On observe ensuite un palier à la température de brasage, par exemple de 940 à 1100 °C pendant une durée de 1 minute à 2 heures, par exemple de 1 heure.

On refroidit l'empilement depuis la température de brasage jusqu'à la température ambiante, par exemple de 20°C à une vitesse par exemple de 0, 5°C/min.

Le matériau préféré pour les plaques terminales et les interconnecteurs est le Crofer22APU^{®} produit par ThyssenKrupp^{®}, mais de nombreux autres aciers ferritiques peuvent être utilisés tels que le F18TNb d' ArcelorMittal^{®}.

Des superalliages à base de Nickel peuvent aussi être employés tels que le Haynes 230^{®}.

Les plaques terminales et les interconnecteurs peuvent être éventuellement revêtus d'un dépôt protecteur d'oxyde, obtenu par dépôt physique ou chimique en phase vapeur, par sérigraphie ou projection plasma, par exemple.

Une mise en légère pression du stack peut être effectuée pour assurer la jonction entre plaque et électrodes.

Comme cela est montré sur les figures 8A et 8B, lors du cycle de brasage entre la cellule (81) constituée par une cathode (82), un électrolyte (83) et une anode (84), et les interconnecteurs (85, 86), la composition de brasure (87) ou alliage de brasage est initialement déposée sur les surfaces supérieure ou inférieure (88) des électrodes correspondant aux secondes zones (89) de surface de l'électrolyte, ces secondes zones étant délimitées par des premières zones de surface (810) non couvertes et correspondant à des jours (811) dans les électrodes.

La composition de brasure passe ensuite, sous l'effet du chauffage à l'état liquide (figure 8B), et s'infiltre par capillarité dans la ou les seconde(s) zone(s) (89) par exemple dans l'anneau d'électrode (72) tel que représenté sur les figures 7, 8A et 8B, bouche sa porosité tout en réduisant son épaisseur initiale compatible avec une maîtrise de la chaine de cote, et permet en une même opération d'assembler l'électrolyte et les interconnecteurs.

La brasure s'arrête par effet capillaire aux bords de la seconde zone par exemple de l'anneau (72, 89) selon les directions X et Y ; l'infiltration capillaire est gouvernée par le rayon des pores ; lorsque ce rayon devient infini, la longueur d'infiltration devient nulle. Dans la direction Z, la quantité de brasure est calculée pour qu'elle atteigne l'interface électrolyte par exemple Zircone/Électrode (surface 89) en tenant compte de la porosité de cette dernière (Figure 8B), mais aussi pour que la brasure en surface de l'électrode soit d'une épaisseur inférieure ou égale à 20% de l'épaisseur de l'électrode, avantageusement pour qu'il ne reste plus de brasure en surface (88) de l'électrode, et qu'ainsi la chaîne de cotes du stack soit respectée.

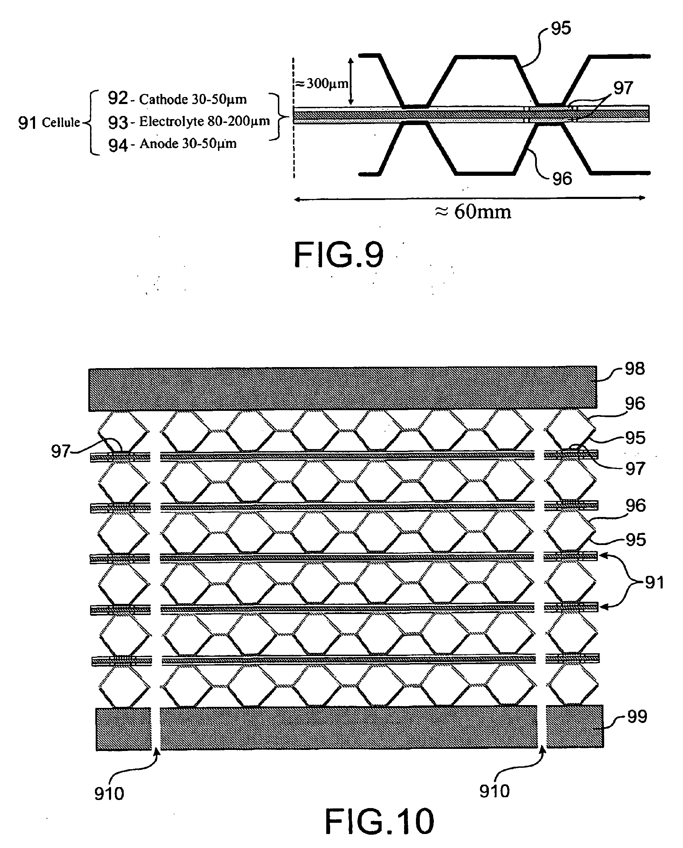

Un module élémentaire d'un électrolyseur haute température (ou d'une SOFC) fabriqué par le procédé selon l'invention est représenté sur la figure 9. Ce module élémentaire comprend une cellule (91) avec une cathode (92) par exemple d'une épaisseur de 30 µm, un électrolyte (93) par exemple d'une épaisseur de 80 à 200 µm, et une anode (94) par exemple d'une épaisseur de 30 µm. Ce module comprend en outre des (demi) interconnecteurs inférieur (95) et supérieur (96) appartenant respectivement à des plaques d'interconnexion supérieure et inférieure de l'empilement. Les interconnecteurs (95, 96) sont grâce au procédé selon l'invention assemblés directement sur l'anode (94) et la cathode (92) par des joints brasés étanches (97) réalisés dans la porosité de ces électrodes sans qu'aucune surépaisseur ne puisse être distinguée et sans qu'aucune infiltration latérale de la brasure dans les électrodes ne soit visible. En effet, grâce au procédé selon l'invention l'infiltration latérale de la brasure a été parfaitement maîtrisée de même que le remplissage de la porosité dans l'épaisseur des électrodes.

Il est à noter que les épaisseurs et dimensions mentionnées sur la Figure 9 ne sont données qu'à titre d'exemples et ne sont en aucun cas limitatives.

Un empilement d'un électrolyseur haute température (ou une SOFC) fabriqué par le procédé selon l'invention est représenté sur la figure 10, il est constitué d'un empilement de modules tel que celui de la figure 9 entre une plaque supérieure terminale (98) et une plaque inférieure terminale (99).

Grâce au procédé de l'invention, il peut être assemblé définitivement en une seule étape de brasage et il présente des cotes précisément maîtrisées du fait de la maîtrise de l'infiltration de la brasure dans les électrodes définissant ainsi des joints parfaitement dimensionnés et délimités.

Cet empilement est également pourvu de passages (910) pour l'alimentation et l'évacuation des gaz.

Le procédé selon l'invention peut s'appliquer non seulement aux électrolyseurs haute température « EHT » et aux piles à combustible à électrolyte solide « SOFC » mais aussi à tout autre système électrochimique fonctionnant à haute température et comportant un empilement d'unités, cellules élémentaires comme par exemple les générateurs d'oxygène ou les membranes de séparation de gaz.

L'invention va maintenant être décrite en référence aux exemples suivants, donnés à titre illustratif et non limitatif.

### EXEMPLES :

### Exemple 1 :

Une éprouvette d'étanchéité constituée d'une cellule de diamètre 56 mm et d'un interconnecteur en « Crofer22APU » a été brasée à travers son électrode en LSM.

A 800°C, sous un différentiel de pression de 200 mbar, le débit de fuite mesuré était inférieur à 5, 6.10⁻⁴ Nml/min/mm.

A titre comparatif, avec des éprouvettes identiques pour lesquelles le joint brasé est réalisé entre l'électrolyte et l'interconnecteur, le débit de fuite mesuré est inférieur à 2.10⁻⁴ Nml/min/mm.

### Exemple 2 :

Des motifs en LSM d'épaisseur 50 µm, de longueur 5 mm et de différentes largeurs (1 mm, 1,5 mm, 2 mm, 2,5 mm et 2,9 mm) ont été réalisés par sérigraphie sur un support en zircone yttriée.

Après frittage des motifs de LSM, des bandes de brasure Argent-Cuivre de largeur 1 mm et de longueur 5 mm ont été superposées sur ces motifs par sérigraphie.

Sur la photographie de la figure 11, on peut observer les bandes de brasure Ag-Cu, grises, sur les motifs de LSM, noirs.

Chaque bande avait une masse de 0,79 mg, ce qui représente une quantité linéique de brasure de 0,16 mg/mm.

L'infiltration de la brasure Ag-Cu dans la porosité des motifs de LSM a été réalisée par traitement thermique sous air à 970°C pendant 2 minutes. L'échantillon de zircone a ensuite été découpé à mi-longueur des motifs, enrobé dans une résine et poli jusqu'au grain 1 µm de façon à observer la répartition de la brasure dans la LSM et à quantifier le pourcentage de porosité infiltrée. Les cinq motifs de LSM infiltrés d'Ag-Cu ont été observés en microscopie optique. Aucun ne présentait de résidu métallique en surface, hormis quelques îlots de CuO de 3-4 µm d'épaisseur. Les taux de remplissage de leur porosité ont été estimés approximativement par analyse d'images et sont donnés dans le tableau 1, ci-dessous.

**Tableau 1 : Taux de remplissage des 5 motifs de LSM**

| Motif de LSM 1 mm | Motif de LSM 1, 5 mm | Motif de LSM 2 mm | Motif de LSM 2,5 mm | Motif de LSM 2,9 mm |
|---|---|---|---|---|
| 85% | 70% | 60% | 50% | 40% |

Pour tous les motifs, il a été confirmé que la brasure a atteint l'interface LSM poreuse/YSZ dense par infiltration capillaire et a bien été stoppée aux bords des motifs.

Les motifs de LSM de largeur 1 mm et 1,5 mm ont également été observés en coupe par microscopie électronique à balayage.

La coupe du motif de LSM de largeur 1 mm est présentée sur la figure 12 et celle du motif de LSM de largeur 1,5 mm sur la figure 13.

### Exemple 3 :

Une électrode en LSM de 50 µm d'épaisseur a été déposée par sérigraphie sur un disque en zircone yttriée (YSZ) de diamètre 56 mm, puis frittée.

Une électrode en NiO-CGO a été sérigraphiée de façon symétrique sur l'autre face de l'électrolyte. L'électrode en LSM était munie de deux ajours, jours, annulaires permettant de séparer la zone active de l'électrode de la zone sur laquelle est réalisé ensuite le joint brasé (Figure 14). La zone du joint faisait 1,45 mm de large et les ajours faisaient 0,5 mm.

Un cordon de pâte de brasure Ag-3Cu (151) a ensuite été déposé au moyen d'un robot au centre de la zone (152) située entre les deux ajours (153, 154) (Figure 15). La quantité linéique de brasure était de 0,22 mg/mm.

Une maquette, constituée de cette cellule, d'une pièce emboutie en Crofer22APU et d'une pièce d'épaisseur 2,5 mm en Crofer22APU, a ensuite été brasée sous air à 970°C.

La figure 16 présente cette maquette après brasage.

La figure 17 est une vue CAO en coupe de cette pièce, permettant de visualiser la zone de brasage entre l'embouti en Crofer22APU et l'électrode en LSM ajourée.

Plus précisément, sur la figure 17 sont représentés la pièce « épaisse » en Crofer22APU (171), l'embouti en Crofer 22APU (172), le joint brasé (173), et l'électrode en LSM ajourée (174).

Après brasage, la pièce a été découpée en six morceaux en forme de portions de camembert ; deux des morceaux ont été enrobés et polis pour évaluer la qualité des interfaces brasées et le taux de remplissage du LSM par la brasure.

Lors de la découpe, les pièces se sont délaminées (185) au niveau du spinelle (Cr, Mn)₃O₄ situé en surface du Crofer22APU.

Des observations des pièces ont été réalisées en microscopie optique (Figure 18).

Sur la figure 18, on identifie l'embouti en Crofer22APU (181), la LSM infiltrée par Ag-3Cu (182), le YSZ (183), et le NiO-CGO (184), ainsi que le phénomène de délaminage (185).

Ces observations en microscopie optique ont montré que :
1) il n'y a pas de brasure résiduelle en surface de la LSM ;
2) la brasure s'est infiltrée jusqu'au YSZ ;
3) la brasure a bien été stoppée par les ajours.

## Revendications

1. Procédé de fabrication d'un électrolyseur haute température « EHT » ou d'une pile à combustible haute température « SOFC », comprenant un empilement vertical (8) de n cellules planaires élémentaires (5, 81, 91) en alternance avec n+1 plaques d'interconnexion (9, 14, 15, 85, 86, 95, 96), chacune des cellules élémentaires (5, 81, 91) étant constituée par une anode (1, 84, 94) et une cathode (2, 82, 92) poreuses planes respectivement disposées sur chacune des faces d'un électrolyte (3, 83, 93) dense plan, et des joints brasés (13, 97) étant prévus à des points de contact entre les cellules élémentaires (5, 81, 91) et les plaques d'interconnexion (9, 14, 15, 85, 86, 95, 96) procédé dans lequel on réalise les étapes successives suivantes :
a) on prépare respectivement une anode (84) ajourée et une cathode (82) ajourée sur chacune des faces de l'électrolyte (83), de façon à laisser des premières zones de surface (810) de chacune des faces de l'électrolyte (83) correspondant aux jours (811) non couvertes par l'anode (84) ou la cathode (82), ces premières zones (810) non couvertes délimitant une ou des seconde(s) zone(s) de surface (89) de chacune des faces de l'électrolyte couverte(s) par l'anode (84) ou la cathode (82) aux emplacements prévus des joints brasés, moyennant quoi on obtient une cellule élémentaire (81) comprenant une anode (84) et une cathode (82) ajourées (811), chacune avec une épaisseur ;
b) on dépose une couche de composition de brasure (87) sur les surfaces (88) de l'anode (84) et de la cathode (82) correspondant aux secondes zones (89), la quantité de composition de brasure (87) étant telle que, à l'état fondu, elle remplisse toute la porosité dans l'épaisseur de l'anode (84) ou de la cathode (82) jusqu'à la surface de l'électrolyte dans les secondes zones (89), sans qu'elle dépasse au-delà de la surface (88) de l'anode (84) ou de la cathode (82) d'une épaisseur de plus de 20% de l'épaisseur de l'anode (84) ou de la cathode (82), moyennant quoi on obtient une cellule élémentaire (81) pourvue d'une composition de brasure (87) ;
c) on répète n fois les étapes a) et b) ;
d) on empile verticalement successivement une plaque d'interconnexion (85, 86, 95, 96) puis une cellule (81) ;
e) on répète l'étape d) n fois, puis on empile une dernière ou n + 1^{ème} plaque d'interconnexion (98) ;
f) on chauffe l'empilement formé par les cellules élémentaires (81) pourvues de la composition de brasure (87) et les plaques d'interconnexion (85, 86) à une température de brasage suffisante pour faire fondre la composition de brasure (87), moyennant quoi la composition de brasure (87) remplit toute la porosité dans l'épaisseur de l'anode (84) ou de la cathode (82) depuis leur surface (88) jusqu'à la surface de l'électrolyte dans les secondes zones (89), sans qu'elle dépasse au-delà de la surface (88) de l'anode (84) ou de la cathode (82) d'une épaisseur de plus de 20% de l'épaisseur de l'anode (84) ou de la cathode (82) ;
g) on refroidit l'empilement depuis la température de brasage jusqu'à la température ambiante moyennant quoi les électrolytes (93) et les interconnecteurs (95, 96) sont assemblés par les joints brasés (97).

2. Procédé selon la revendication 1, dans lequel dans l'étape b) la quantité de composition de brasure est telle que, à l'état fondu, elle ne dépasse pas au-delà de la surface de l'anode ou de la cathode ; et dans l'étape f), la composition de brasure ne dépasse pas au-delà de la surface de l'anode ou de la cathode.

3. Procédé selon la revendication 1, dans lequel préalablement à l'étape d), on met en place sur un support, une plaque terminale inférieure de l'empilement, et suite à l'étape e) on met en place une plaque supérieure terminale de l'empilement.

4. Procédé selon l'une quelconque des revendications 1 à 3, dans lequel l'anode et la cathode ajourées sont préparées en déposant sélectivement une couche d'une suspension d'un matériau d'anode, respectivement de cathode, par exemple par sérigraphie au moyen d'un masque, seulement sur lesdites secondes zones de chacune des faces de l'électrolyte puis en frittant lesdites couches.

5. Procédé selon la revendication 4, dans lequel on dépose une couche d'une suspension d'un matériau de cathode sur une face, de préférence la face supérieure de l'électrolyte, et on fritte ladite couche, puis on dépose une couche d'une suspension d'un matériau d'anode sur l'autre face, de préférence la face inférieure de l'électrolyte, et on fritte ladite couche.

6. Procédé selon l'une quelconque des revendications 1 à 3, dans lequel l'anode et la cathode ajourées sont préparées en préparant une anode et une cathode complètes non ajourées, par exemple par sérigraphie puis frittage, et en créant ensuite les jours par élimination de matière par exemple par ablation laser ou usinage.

7. Procédé selon l'une quelconque des revendications précédentes, dans lequel la composition de brasure est déposée sur les secondes zones par sérigraphie au moyen d'un masque, ou bien manuellement ou avec un robot au moyen d'une seringue et d'un dispenseur pneumatique.

8. Procédé selon l'une quelconque des revendications précédentes, dans lequel l'électrolyte a une épaisseur de 5 à 200 µm, de préférence de 50 à 150 µm, de préférence encore de 90 µm.

9. Procédé selon l'une quelconque des revendications précédentes, dans lequel l'électrolyte est en un matériau dense présentant une porosité inférieure à 10% en volume.

10. Procédé selon l'une quelconque des revendications précédentes, dans lequel l'électrolyte est en un matériau choisi parmi les céramiques oxydes dopées telles que la zircone yttriée, la zircone scandiée et la manganite de lanthane strontiée dopée au cérium.

11. Procédé selon l'une quelconque des revendications précédentes, dans lequel l'anode et la cathode ont une épaisseur de 10 à 70 µm, de préférence de 40 µm.

12. Procédé selon l'une quelconque des revendications précédentes, dans lequel l'anode et la cathode sont en un matériau poreux présentant une porosité de 30 à 50 % en volume.

13. Procédé selon l'une quelconque des revendications précédentes, dans lequel l'anode et la cathode sont indépendamment l'une de l'autre en un matériau choisi parmi le cermet Oxyde de Nickel-Oxyde de Cérium Gadolinié (NiO-CGO), la Manganite de Lanthane Strontiée (La₁₋ₓSrₓMn_{Y}O_{3-δ} ou LSM), le cermet NiO-Zircone yttriée YSZ, les nickelates (La₄Ni₃O₁₀, La/Nd₂NiO₄), les chromo-manganites (LaCeSrCrMnO), les ferrites (La_{1-X}Sr_{X}Fe_{Y}O_{3-δ}), les cobaltites (La_{1-X}Sr_{X}Co_{Y}O_{3-δ}) et les titanates (La₄Srₙ₋₄TiₙO_{3n+2-δ).}

14. Procédé selon l'une quelconque des revendications précédentes, dans lequel l'étape f) ou étape de brasage est réalisée sous air.

15. Procédé selon l'une quelconque des revendications précédentes, dans lequel l'anode, la cathode et l'électrolyte ont des surfaces planes identiques, et de préférence qui coïncident.

## Claims

1. A method for manufacturing a high temperature electrolyzer « HTE » or a high temperature fuel cell « SOFC », comprising a vertical stack (8) of n elementary planar cells (5, 81, 91) alternating with n+1 interconnection plates (9, 14, 15, 85, 86, 95, 96), each of the elementary cells (5, 81, 91) consisting of a planar porous anode (1, 84, 94) and a planar porous cathode (2, 82, 92) respectively positioned on each of the faces of a planar dense electrolyte (3, 83, 93), and brazed joints (13, 97) being provided at contact points between the elementary cells (5, 81, 91) and the interconnection plates (9, 14, 15, 85, 86, 95, 96), a method wherein the following successive steps are carried out:
a) an openworked anode (84) and an openworked cathode (82) are respectively prepared on each of the faces of the electrolyte (83), so as to leave first surface areas (810) of each of the faces of the electrolyte (83) corresponding to the holes, openings, (811) non-covered by the anode (84) or the cathode (82), these first non-covered areas (810) delimiting second surface areas(s) (89) of each of the faces of the electrolyte covered by the anode (84) or the cathode (82) at the locations provided for the brazed joints, whereby an elementary cell (81) is obtained comprising an openworked (811) anode (84) and an openworked (811) cathode (82), each with a thickness;
b) a brazing composition layer (87) is deposited on the surfaces (88) of the anode (84) and of the cathode (82) corresponding to the second areas (89), the brazing composition (87) amount being such that, in the molten state, it fills the whole porosity in the thickness of the anode (84) or of the cathode (82) as far as the surface of the electrolyte in the second areas (89), without jutting out beyond the surface (88) of the anode (84) or of the cathode (82) by a thickness of more than 20% of the thickness of the anode (84) or of the cathode (82), whereby an elementary cell (81) provided with a brazing composition (87) is obtained;
c) steps a) and b) are repeated n times;
d) an interconnection plate (85, 86, 95, 96) and then a cell (81) are successively stacked vertically;
e) step d) is repeated n times, and then a last or n+1^{th} interconnection plate (98) is stacked;
f) the stack formed by the elementary cells (81) provided with the brazing composition (87) and by the interconnection plates (85, 86) is heated to a sufficient brazing temperature in order to melt the brazing composition (87), whereby the brazing composition (87) fills the whole porosity in the thickness of the anode (84) or of the cathode (82) from their surface (88) as far as the surface of the electrolyte in the second areas (89), without jutting out beyond the surface (88) of the anode (84) or of the cathode (82)by a thickness of more than 20% of the thickness of the anode (84) or of the cathode (82);
g) the stack is cooled from the brazing temperature down to room temperature, whereby the electrolytes (93) and the interconnectors (95, 96) are assembled by the brazed joints (97).

2. The method according to claim 1, wherein, in step b), the brazing composition amount is such that, in the molten state, it does not jut out beyond the surface of the anode or of the cathode; and in step f), the brazing composition does not jut out beyond the surface of the anode or of the cathode.

3. The method according to claim 1, wherein prior to step d), a lower terminal plate of the stack is set into place on a support, and following step e), a terminal upper plate of the stack is set into place.

4. The method according to any one of claims 1 to 3, wherein the openworked anode and cathode are prepared by selectively depositing a layer of a suspension of an anode, respectively cathode, material for example by screen-printing by means of a mask, only on said second areas of each of the faces of the electrolyte and then by sintering said layers.

5. The method according to claim 4, wherein a layer of a suspension of a cathode material is deposited on one face, preferably the upper face of the electrolyte, and said layer is sintered, and then a layer of a suspension of an anode material is deposited on the other face, preferably the lower face of the electrolyte, and said layer is sintered.

6. The method according to any one of claims 1 to 3, wherein the openworked anode and cathode are prepared by preparing a non-openworked complete anode and cathode, for example by screen-printing followed by sintering, and then by generating holes, openings, by removing material, for example by laser ablation or machining.

7. The method according to any one of the preceding claims, wherein the brazing composition is deposited on the second areas by screen-printing by means of a mask, or else manually or with a robot by means of a syringe and a pneumatic dispenser.

8. The method according to any one of the preceding claims, wherein the electrolyte has a thickness from 5 to 200 µm, preferably from 50 to 150 µm, still preferably 90 µm.

9. The method according to any one of the preceding claims, wherein the electrolyte is made of a dense material having a porosity of less than 10% by volume.

10. The method according to any one of the preceding claims, wherein the electrolyte is a material selected from doped oxide ceramics such as yttriated zirconia, scandiated zirconia and strontiated lanthanum manganite doped with cerium.

11. The method according to any one of the preceding claims, wherein the anode and the cathode have a thickness from 10 to 70 µm, preferably 40 µm.

12. The method according to any one of the preceding claims, wherein the anode and the cathode are made of a porous material having a porosity from 30% to 50% by volume.

13. The method according to any one of the preceding claims, wherein the anode and the cathode are independently of each other made of a material selected from the cermet nickel-oxide - cerium-gadolinium oxide (NiO-CGO), lanthanum strontium manganite (La₁₋ₓSrₓMn_{Y}O_{3-δ} or LSM), the cermet: NiO-yttria-stabilized zirconia YSZ, nickelates (La₄Ni₃O₁₀, La/Nd₂NiO₄), chromo-manganites (LaCeSrCrMnO), ferrites (La₁-_{X}Sr_{X}Fe_{Y}O_{3-δ}), cobaltites (La_{1-X}Sr_{X}CO_{Y}O_{3-δ}) and titanates (La₄Srₙ₋₄TiₙO_{3n+2-δ}).

14. The method according to any one of the preceding claims, wherein step f) or brazing step is carried out in air.

15. The method according to any one of the preceding claims, wherein the anode, the cathode and the electrolyte have identical planar surfaces and which preferably coincide.

## Patentansprüche

1. Verfahren zur Herstellung eines Hochtemperaturelektrolysators (EHT) oder einer Hochtemperaturbrennstoffzelle (SOFC), umfassend einen vertikalen Stapel (8) aus n planaren Elementarzellen (5, 81, 91) im Wechsel mit n+1 Verbindungsplatten (9, 14, 15, 85, 86, 95, 96), wobei jede Elementarzelle (5, 81,91) eine planare, poröse Anode (1, 84, 94) und eine planare, poröse Kathode (2, 82, 92), die jeweils auf beiden Seiten eines planen, dichten Elektrolyten (3, 83, 93) angeordnet sind umfasst, und Lötverbindungen (13, 97), an Kontaktstellen zwischen den Elementarzellen (5, 81, 91) und den Verbindungsplatten (9, 14, 15, 85, 86, 95, 96) vorgesehen sind, wobei in diesem Verfahren die folgenden, aufeinanderfolgenden Schritte durchgeführt werden:
a) auf jeder Seite des Elektrolyten (83) werden jeweils eine durchlöcherte Anode (84) und eine durchlöcherte Kathode (82) so hergestellt, dass erste Oberflächenbereiche (810) jeder Seite des Elektrolyten (83), die den Löchern (811) entsprechen, nicht durch die Anode (84) oder die Kathode (82) bedeckt sind, wobei diese unbedeckten ersten Bereiche (810) einen zweiten (zweite) Oberflächenbereich(e) (89) jeder Seite des durch die Anode (84) oder die Kathode (82) bedeckten Elektrolyten an den für die Lötverbindungen vorhergesehenen Stellen begrenzt, wodurch eine Elementarzelle (81) erhalten wird, die eine durchlöcherte (811) Anode (84) und eine durchlöcherte (811) Kathode (82) mit jeweils einer Dicke umfasst;
b) auf die den zweiten Bereichen (89) entsprechenden Oberflächen (88) der Anode (84) und der Kathode (82) wird eine Schicht aus einer Lötzusammensetzung (87) aufgebracht, wobei die Menge der Lötzusammensetzung (87) solcherart ist, dass sie im geschmolzenen Zustand alle Poren in der Dicke der Anode (84) oder der Kathode (82) bis zur Oberfläche des Elektrolyten in den zweiten Bereichen (89) ausfüllt, ohne dass sie die Oberfläche (88) der Anode (84) oder der Kathode (82) in einer Dicke von mehr als 20 % der Dicke der Anode (84) oder der Kathode (82) übersteigt, wodurch eine mit einer Lötzusammensetzung (87) versehene Elementarzelle (81) erhalten wird;
c) die Schritte a) und b) werden n Mal wiederholt;
d) eine Verbindungsplatte (85, 86, 95, 96) und dann eine Zelle (81) werden nacheinander senkrecht gestapelt;
e) Schritt d) wird n Mal wiederholt, dann wird eine letzte oder (n+1)te Verbindungsplatte (98) gestapelt;
f) der durch die mit der Lötzusammensetzung (87) versehenen Elementarzellen (81) und die Verbindungsplatten (85, 86) gebildete Stapel wird auf eine Löttemperatur erhitzt, die dazu ausreicht, die Lötzusammensetzung (87) schmelzen zu lassen, wodurch die Lötzusammensetzung (87) alle Poren in der Dicke der Anode (84) oder der Kathode (82) von ihrer Oberfläche (88) bis zur Oberfläche des Elektrolyten in den zweiten Bereichen (89) ausfüllt, ohne dass sie die Oberfläche (88) der Anode (84) oder der Kathode (82) in einer Dicke von mehr als 20 % der Dicke der Anode (84) oder der Kathode (82) übersteigt;
g) der Stapel wird von der Löttemperatur bis auf Raumtemperatur abgekühlt, wodurch die Elektrolyte (93) und die Verbindungen (95, 96) durch die Lötverbindungen (97) verbunden werden.

2. Verfahren gemäß Anspruch 1, bei dem im Schritt b) die Menge der Lötzusammensetzung solcherart ist, dass sie im geschmolzenen Zustand die Oberfläche der Anode oder der Kathode nicht übersteigt, und in Schritt f) die Lötzusammensetzung die Oberfläche der Anode oder der Kathode nicht übersteigt.

3. Verfahren gemäß Anspruch 1, bei dem vor Schritt d) eine untere Stapelendplatte auf einem Träger und nach Schritt e) eine obere Stapelendplatte angebracht werden.

4. Verfahren gemäß einem der Ansprüche 1 bis 3, bei dem die durchlöcherte Anode und die durchlöcherte Kathode durch selektives Aufbringen einer Schicht aus einer Suspension eines Anoden- beziehungsweise Kathodenmaterials durch zum Beispiel Siebdruck mittels einer Maske nur auf den besagten zweiten Bereichen jeder Seite des Elektrolyten und dann durch Sintern dieser Schichten hergestellt werden.

5. Verfahren gemäß Anspruch 4, bei dem eine Schicht aus einer Suspension eines Kathodenmaterials auf einer Seite, vorzugsweise der Oberseite des Elektrolyten aufgebracht wird und diese Schicht gesintert wird und dann eine Schicht aus einer Suspension eines Anodenmaterials auf der anderen Seite, vorzugsweise der Unterseite des Elektrolyten aufgebracht wird und diese Schicht gesintert wird.

6. Verfahren gemäß einem der Ansprüche 1 bis 3, bei dem die durchlöcherte Anode und die durchlöcherte Kathode dadurch hergestellt werden, dass eine vollständig undurchlöcherte Anode und Kathode zum Beispiel durch Siebdruck und anschließende Sinterung hergestellt werden und dann die Löcher durch Entfernen von Material zum Beispiel durch Laserablation oder maschinelle Bearbeitung erzeugt werden.

7. Verfahren gemäß einem der vorangehenden Ansprüche, bei dem die Lötzusammensetzung durch Siebdruck mittels einer Maske beziehungsweise manuell oder mit einem Roboter mittels einer Spritze und eines pneumatischen Dispensers auf den zweiten Bereichen aufgetragen wird.

8. Verfahren gemäß einem der vorangehenden Ansprüche, bei dem der Elektrolyt eine Dicke von 5 bis 200 µm, vorzugsweise von 50 bis 150 µm, bevorzugter von 90 µm aufweist.

9. Verfahren gemäß einem der vorangehenden Ansprüche, bei dem der Elektrolyt aus einem dichten Material ist, das eine Porosität unter 10 Vol.-% aufweist.

10. Verfahren gemäß einem der vorangehenden Ansprüche, bei dem der Elektrolyt aus einem Material ist, das aus dotierten Oxidkeramiken wie yttriumhaltigem Zirconiumoxid, scandiumhaltigem Zirconiumoxid und mit Cerium dotiertem, strontiumhaltigem Lanthanmanganit ausgewählt ist.

11. Verfahren gemäß einem der vorangehenden Ansprüche, bei dem die Anode und die Kathode eine Dicke von 10 bis 70 µm, bevorzugter von 40 µm aufweisen.

12. Verfahren gemäß einem der vorangehenden Ansprüche, bei dem die Anode und die Kathode aus einem porösen Material sind, das eine Porosität von 30 bis 50 Vol.-% aufweist.

13. Verfahren gemäß einem der vorangehenden Ansprüche, bei dem die Anode und die Kathode unabhängig voneinander aus einem Material sind, das aus dem Cermet aus Nickeloxid- gadoliniumhaltigen Ceriumoxid (NiO-CGO), strontiumhaltigem Lanthanmanganit (La₁₋ₓSrₓMn_{y}O_{3-δ} oder LSM), dem Cermet NiO- yttriumhaltigen Zirconiumoxid YSZ, Nickelaten (La₄Ni₃O₁₀, La/Nd₂NiO₄), Chrommanganiten (LaCeSrCrMnO), Ferriten (La₁₋ₓSrₓFe_{y}O_{3-δ}), Cobaltiten (La₁₋ₓSrₓCo_{y}O_{3-δ}) und Titanaten (La₄Srₙ₋₄TiₙO_{3n+2-δ}) ausgewählt ist.

14. Verfahren gemäß einem der vorangehenden Ansprüche, bei dem der Schritt f) oder Lötschritt an der Luft durchgeführt wird.

15. Verfahren gemäß einem der vorangehenden Ansprüche, bei dem die Anode, die Kathode und der Elektrolyt identische plane und vorzugsweise kongruente Oberflächen aufweisen.
